# EUROPEAN PATENT APPLICATION

(11) **EP 2 148 231 A1**
(43) Date of publication of application: **27.01.2010**
(21) Application number: 08013386.1
(22) Date of filing: 25.07.2008
(51) Int. Cl.: G02B 6/44

(54) **Furcation adapter**

(71) Applicant: CCS Technology, Inc., Wilmington, DE 19803 (US)
(72) Inventor: Fabrykowski, Grzegorz, 95-010 Strykow (PL); Klak, Robert, 98-220 Zdunska Wola (PL)
(74) Representative: Sturm, Christoph

(57) **Abstract**

The invention relates to a furcation adapter (10) for optical fibers, with a plate-like basic body (16), a first strain relief device (17, 17', 17") being fixed detachably on a first side (13) of the plate-like basic body (16), and a second strain relief device (18) being fixed detachably on a second, opposing side (14) of the plate-like basic body (16). (Figure 2)

## Description

The invention relates to a furcation adapter for optical fibers.

The product catalog "Zubehör fur LWL-Kabelnetze", page 65, Corning Cable Systems GmbH & Co. KG, year 2001, has disclosed a furcation adapter for optic fibers. The furcation adapter disclosed therein has a plate-like basic body, a strain relief device for a fiber optic cable being formed on a first side of the plate-like basic body as an integral component thereof, and a strain relief device for tubes being formed on a second side of the plate-like basic body as an integral part thereof, it being possible for the optical fibers guided in the fiber optic cable to be inserted into the tubes. This furcation adapter known from the prior art is designed for a defined type of fiber optic cable and a defined type of tube. Its application is therefore restricted.

Against this background, the present invention is based on the object of providing a novel furcation adapter for optical fibers. This problem is solved by a furcation adapter according to claim 1.

The furcation adapter according to the invention has a plate-like basic body, a first strain relief device being fixed detachably on a first side of the plate-like basic body, and a second strain relief device being fixed detachably on a second, opposing side of the plate-like basic body.

The present invention proposes a furcation adapter whose strain relief devices, which are formed on opposite sides of the plate-like basic body, are connected detachably to the plate-like basic body, with a furcation adapter thereby being provided whose configuration can be altered.

The furcation adapter according to the invention can be matched easily to different intended uses by replacing the strain relief devices. This increases flexibility in comparison with the prior art. Furthermore, cost savings can be made.

In accordance with an advantageous development of the invention, a strain relief device for a fiber optic cable guiding a plurality of optical fibers is fixed on the first side of the plate-like basic body, a strain relief device for a plurality of tubes being fixed on the second side of the plate-like basic body, it being possible for the optical fibers guided in the fiber optic cable to be inserted into the tubes and furcated so as to be distributed between them.

In accordance with a further advantageous development of the invention, a strain relief device for a plurality of incoming tubes is fixed on the first side of the plate-like basic body, a strain relief device for a plurality of outgoing tubes being fixed on the second side of the plate-like basic body, it being possible for optical fibers guided in the incoming tubes to be inserted into the outgoing tubes and to be furcated so as to be distributed between them.

Preferably, the or each strain relief device for the tubes has at least two comb-like intercepting sections, which run parallel to one another, the intercepting sections, which run parallel to one another, can be moved in relation to one another in such a way that, in the projection, an effective cross section of slots which are used for receiving the tubes changes in order to thus match the strain relief device for the tubes to different tube diameters.

Preferred developments of the invention are given in the dependent claims and the description below. Exemplary embodiments will be explained in more detail with reference to the drawing, in which:
- figure 1: shows a perspective view of a furcation adapter according to the invention for optical fibers;
- figure 2: shows an exploded illustration of a furcation adapter according to the invention for optical fibers having a plurality of alternative strain relief devices;
- figure 3: shows a perspective view of a detail of the furcation adapter;
- figure 4: shows the detail of figure 3 in a view from the front;
- figure 5: shows a perspective view of a furcation adapter according to the invention for optical fibers together with a supporting plate for a plurality of furcation adapters in a first state; and
- figure 6: shows the arrangement in figure 5 in a second state.

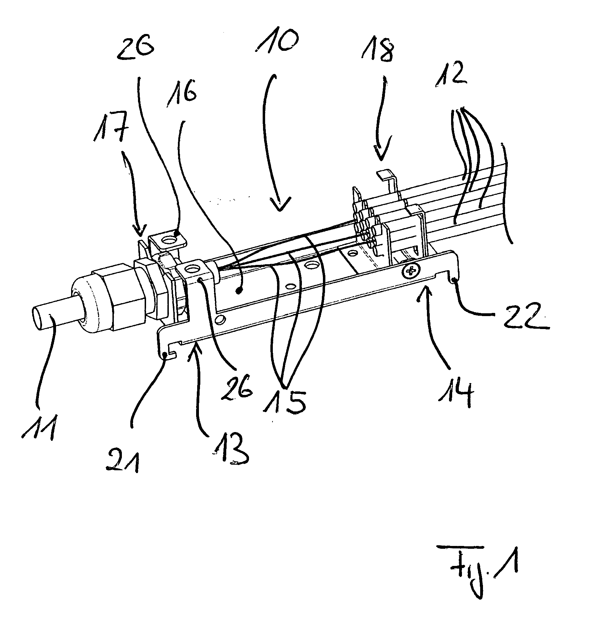

Figure 1 shows an exemplary embodiment of a furcation adapter 10 according to the invention in the fitted state together with a fiber optic cable 11 and a plurality of tubes 12, the fiber optic cable 11 being supplied to the furcation adapter 10 on a first side 13 thereof, and the tubes 12 being supplied to the furcation adapter 10 on a second side 14 thereof. The fiber optic cable 11 guides a plurality of optical fibers 15, which can be inserted into the tubes 12 and furcated so as to be distributed between the tubes 12.

The furcation adapter 10 has a plate-like basic body 16, a first strain relief device 17 being fixed detachably on the plate-like basic body 16 on the first side 13 of the plate-like basic body 16, and a second strain relief device 18 being fixed detachably on the basic body 16 on the second side 14 of the plate-like basic body 16.

In the exemplary embodiment in figure 1, the strain relief device 17, which is fixed detachably at the first end 13 to the plate-like basic body 16, is in the form of a strain relief device 17 for the fiber optic cable 11 guiding a plurality of optical fibers 15.

The strain relief device 18, which is fixed detachably on the second side 14 to the plate-like basic body 16, is in the form of a strain relief device 18 for the tubes 12 in the exemplary embodiment in figure 1.

As has already been mentioned, the strain relief devices 17, 18 are fixed detachably to the plate-like basic body 16. This makes it possible to match the furcation adapter 10 to different intended uses by replacing the strain relief devices 17, 18.

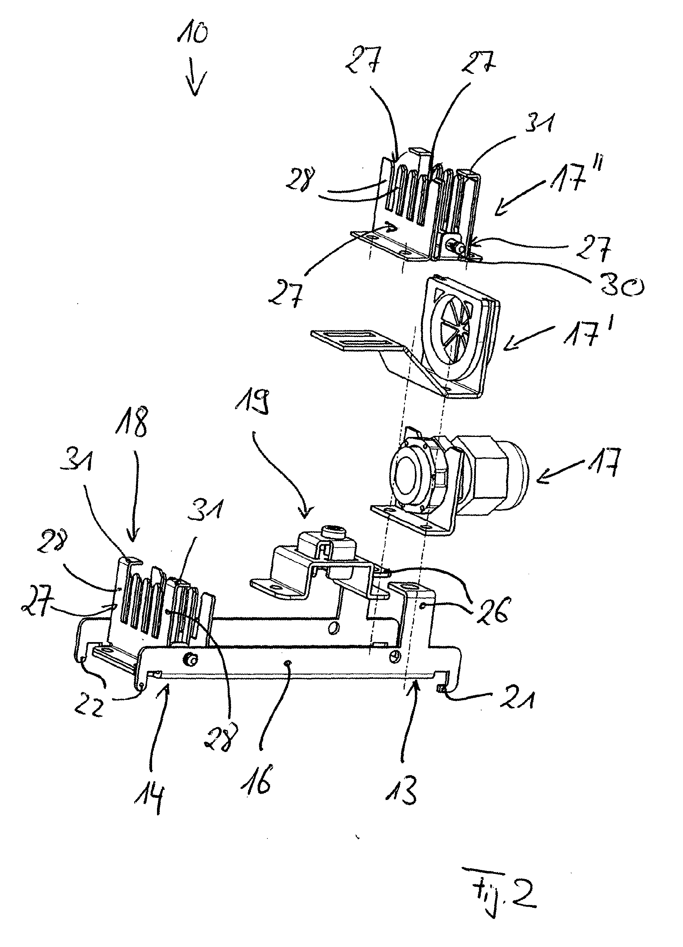

Thus, figure 2 shows an exploded illustration of the furcation adapter 10 according to the invention, with in total three different variants of strain relief devices 17, 17' and 17" being shown for the second end 13 of the plate-like basic body 16.

The strain relief device 17 in figure 2 corresponds to the strain relief device 17 in figure 1, in which the strain relief device 17 is a strain relief device for the fiber optic cable 11.

As an alternative to the strain relief device 17, the strain relief device 17' or the strain relief devices 17" can also be associated with the end 13 of the plate-like basic body 16, with the strain relief device 17' in turn being a strain relief device for a fiber optic cable. The strain relief device 17", on the other hand, is a strain relief device for a plurality of tubes and corresponds in terms of its design to the strain relief device 18.

As shown in figure 2, the furcation adapter according to the invention can also comprise, in addition to the strain relief devices 17 and 17' and 17" and 18, a strain relief device 19 for a central element of a fiber optic cable.

The strain relief device 19 is associated with a central region between the first side 13 and the second side 14 of the plate-like basic body 16 and is detachably connected to this central region of the plate-like basic body 16. Accordingly, the strain relief device 19 is then used in combination with the strain relief devices 17 and 17' if the fiber optic cable to be intercepted using the strain relief devices 17 and 17' comprises a central element.

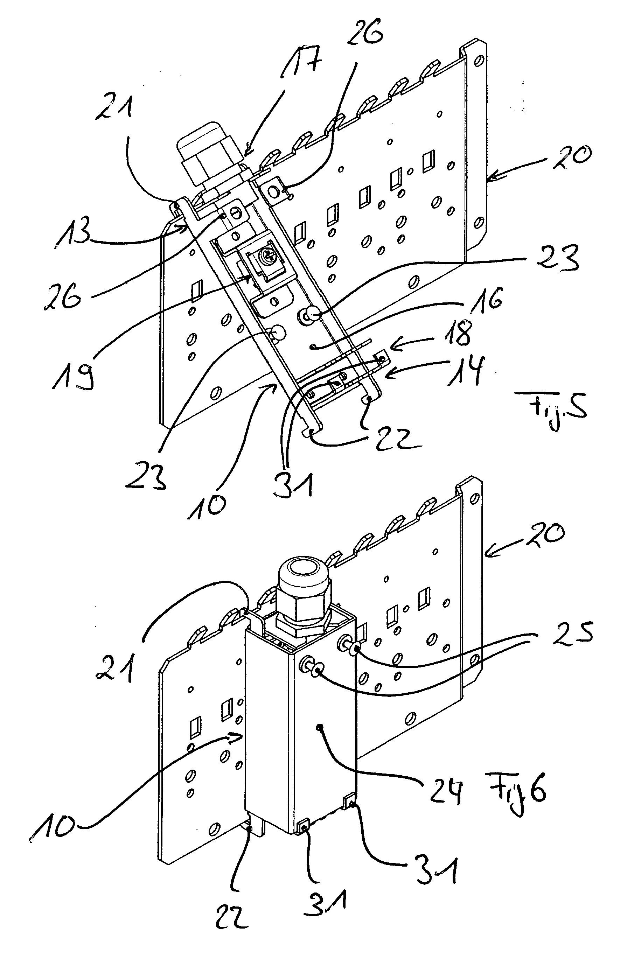

As shown in figures 5 and 6, the furcation adapter 10 according to the invention can be fixed on a supporting plate 20, the supporting plate 20 serving the purpose of accommodating a plurality of furcation adapters 10. Thus, in the exemplary embodiment shown, fixing elements 21, 22 are formed both at the first end 13 and at the second end 14 of the plate-like basic body 16 and can be used to suspend the furcation adapter 10 according to the invention on the supporting plate 20. The fixing elements 21 formed at the first end 13 are in this case U-shaped, and the fixing elements 22 formed at the second end 14 are L-shaped.

As shown in figure 5, a furcation adapter 10 according to the invention is suspended on the supporting plate 20 via the U-shaped fixing elements 21 formed at the first end 13 and is thus pivoted with the second end 14 in the direction of the supporting plate 20. In order to lock the furcation adapter 10 on the supporting plate 20, in this case snap-action pins 23 are associated with the basic body 16 of the furcation adapter 10 and engage in cutouts in the supporting plate 20 when the furcation adapter 10 is fixed on the supporting plate 20.

As shown in figure 6, a housing 24 is associated with the furcation adapter 10, it being possible for the furcation region of the furcation adapter 10, which extends between the first end 13 and the second end 14 thereof, to be covered with the aid of the housing 24.

In this case, as shown in figure 6, the housing 24 can be fixed on the basic body 16 via snap-action pins 25, namely on projections 26 of the basic body 16, which are formed in the region of the first end 13.

The projections 26 extend from the basic body 16 in the opposite direction to the fixing elements 21, 22, with cutouts being introduced into the projections 26, into which cutouts the snap-action pins 25 of the housing 24 engage when the housing 24 is fixed on the basic body 16.

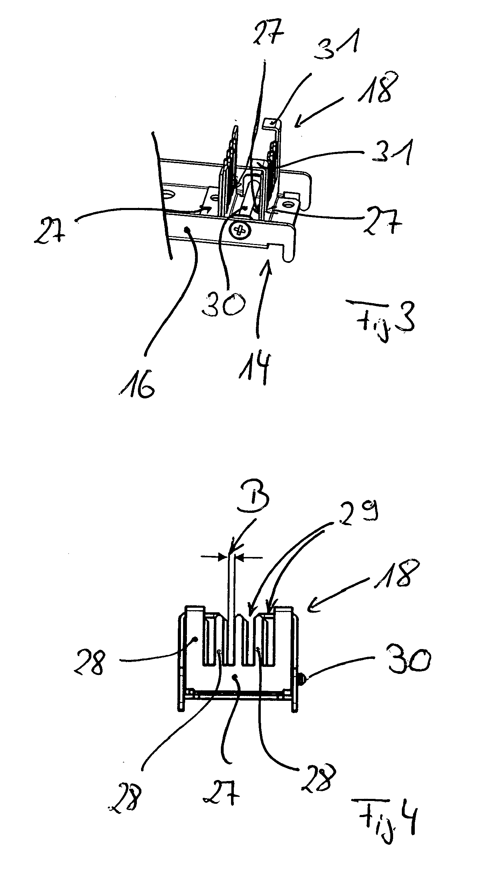

A further particular feature of the furcation adapter 10 according to the invention can be considered to be the strain relief devices 18 and 17" for the tubes. This particular feature is described below with reference to figures 3 and 4 for the strain relief device 18, which is associated with the second end 14 of the basic body 16.

As shown in figures 3 and 4, the strain relief device 18 for the tubes comprises at least two comb-like intercepting sections 27, which run parallel to one another. Each of the comb-like intercepting sections 27 has webs 28, which run parallel to one another and delimit slots 29 for accommodating the tubes. The comb-like intercepting sections 27 are in this case capable of being moved translatorily in relation to one another, with the result that, in the projection, an effective width B of the slots 29 is changed. As a result, the strain relief device 18 for the tubes can be matched to different tube diameters.

In the exemplary embodiment in figures 3 and 4, the strain relief device 18 for the tubes comprises in total four comb-like intercepting sections 27, the two outer comb-like intercepting sections 27 each being designed so as to be fixed, and the two inner comb-like intercepting sections 27 being connected to one another and being capable of moving translatorily together with respect to the outer comb-like intercepting sections 27.

An adjusting screw 30 acts on the two inner, translatorily movable intercepting sections 27, with the two inner comb-like intercepting sections 27 being capable of being moved with respect to the two outer comb-like intercepting sections 27 whilst changing the effective width B of the slots 29 by means of the adjusting screws 30 being turned.

As shown in figure 3, the two outer webs 28 on one of the two outer comb-like intercepting sections 27 is bent back so as to form projections 31, these projections 31 engaging around sections of the housing 24 and securing it in its position when the housing 24 is fixed on the basic body 16 of the furcation adapter 10, as shown in figure 6.

### List of reference numerals

- 10: Furcation adapter
- 11: Fiber optic cable
- 12: Tube
- 13: End
- 14: End
- 15: Optical fibers
- 16: Basic body
- 17, 17', 17": Strain relief device
- 18: Strain relief device
- 19: Strain relief device
- 20: Supporting plate
- 21: Fixing element
- 22: Fixing element
- 23: Snap-action pin
- 24: Housing
- 25: Snap-action pin
- 26: Projection
- 27: Intercepting section
- 28: Webs
- 29: Slots
- 30: Adjusting screw
- 31: Projection

## Claims

1. A furcation adapter for optical fibers, with a plate-like basic body (16), a first strain relief device (17, 17', 17") being fixed detachably on a first side (13) of the plate-like basic body (16), and a second strain relief device (18) being fixed detachably on a second, opposing side (14) of the plate-like basic body (16).

2. The furcation adapter as claimed in claim 1, wherein a strain relief device (17, 17') for a fiber optic cable guiding a plurality of optical fibers is fixed on the first side (13) of the plate-like basic body (16), and wherein a strain relief device (18) for a plurality of tubes is fixed on the second side (14) of the plate-like basic body (16), it being possible for the optical fibers guided in the fiber optic cable to be inserted into the tubes and furcated so as to be distributed between them.

3. The furcation adapter as claimed in claim 1, wherein a strain relief device (17") for a plurality of incoming tubes is fixed on the first side (13) of the plate-like basic body, and wherein a strain relief device (18) for a plurality of outgoing tubes is fixed on the second side (14) of the plate-like basic body, it being possible for optical fibers guided in the incoming tubes to be inserted into the outgoing tubes and to be furcated so as to be distributed between them.

4. The furcation adapter as claimed in one of claims 2 or 3, wherein the or each strain relief device (17", 18) for the tubes is in the form of a comb.

5. The furcation adapter as claimed in claim 4, wherein the or each strain relief device (17", 18) for the tubes has at least two comb-like intercepting sections (27), which run parallel to one another, the intercepting sections (27), which run parallel to one another, can be moved in relation to one another in such a way that, in the projection, an effective width of slots (29) which are used for receiving the tubes changes in order to thus match the strain relief device (17", 18) for the tubes to different tube diameters.

6. The furcation adapter as claimed in one of claims 1 to 5, wherein a strain relief device (19) for a central element of the fiber optic cable is fixed detachably in a central region between the first side (13) and the second side (14) of the plate-like basic body (16).

7. The furcation adapter as claimed in one of claims 1 to 6, wherein snap-action pins (23) are associated with the plate-like basic body (16) and can be used to fix the furcation adapter on a supporting plate (20).

8. The furcation adapter as claimed in one of claims 1 to 7, wherein a housing (24) thereof can be fixed via snap-action pins (25) on projections (26) associated with the plate-like basic body (16).

9. The furcation adapter as claimed in claim 8, wherein bent-back webs (28) of a strain relief device (18) for the tubes guide the housing (24).
